# EUROPEAN PATENT APPLICATION

(11) **EP 4 319 276 A1**
(43) Date of publication of application: **07.02.2024**
(21) Application number: 22831879.6
(22) Date of filing: 24.06.2022
(51) Int. Cl.: H04W 28/02, H04W 76/27, H04B 7/155

(54) **INFORMATION ACQUISITION METHOD, INFORMATION SENDING METHOD, RELATED DEVICE, AND READABLE STORAGE MEDIUM**

(30) Priority: 30.06.2021 CN 202110739145
(71) Applicant: Vivo Mobile Communication Co., Ltd., Dongguan, Guangdong 523863 (CN)
(72) Inventor: LIU, Jinhua, Dongguan, Guangdong 523863 (CN); ZHENG, Qian, Dongguan, Guangdong 523863 (CN)
(74) Representative: Winter, Brandl - Partnerschaft mbB
(86) International application number: PCT/CN2022/101112
(87) International publication number: WO 2023/274065

(57) **Abstract**

An information acquisition method, an information sending method, a related device, and a readable storage medium are disclosed. The information acquisition method includes: performing, by a remote terminal, a first operation, where the first operation satisfies at least one of the following: in a case that the remote terminal is within coverage of a same cell as a relay terminal, the first operation includes at least a first sub-operation; in a case that the remote terminal is not within the coverage of the same cell as the relay terminal or that the remote terminal is not covered by any cell, the first operation is a second sub-operation; or the first operation is determined based on whether the remote terminal has searched out a target cell; the first operation is determined based on an indication of a minimum system information set; and the first operation is determined based on whether the remote terminal has established a sidelink connection to the relay terminal. The first sub-operation is to acquire system information through a first interface, and the first interface is an air interface between the remote terminal and a cell. The second sub-operation is to acquire system information through the relay terminal.

## Description

### CROSS-REFERENCE TO RELATED APPLICATIONS

This application claims priority to Chinese Patent Application No. 202110739145.3, filed in China on June 30, 2021, which is incorporated herein by reference in its entirety.

### TECHNICAL FIELD

This application pertains to the field of communications technologies, and specifically relates to an information acquisition method, an information sending method, a related device, and a readable storage medium.

### BACKGROUND

In a communications system, research is conducted on use of a terminal to provide a terminal-to-network (UE to Network, U2N) relay service. The terminal providing the relay service is referred to as a relay terminal (that is, relay UE), and a terminal provided with the relay service is referred to as a remote terminal (that is, remote UE). The remote terminal establishes a radio resource control (Radio Resource Control, RRC) connection to a serving base station through the relay terminal to implement a wireless backhaul.

System information is key information used by the base station to define a behavior of a terminal. However, currently, no related solution is proposed as to how the remote terminal acquires system information from the base station when the remote terminal needs to establish a wireless backhaul channel to the serving base station through the relay terminal.

### SUMMARY

Embodiments of this application provide an information acquisition method, an information sending method, a related device, and a readable storage medium to resolve a problem of how a remote terminal acquires system information.

According to a first aspect, an information acquisition method is provided and includes:
performing, by a remote terminal, a first operation, where the first operation satisfies at least one of the following:
in a case that the remote terminal is within coverage of a same cell as a relay terminal, the first operation includes at least a first sub-operation;
in a case that the remote terminal is not within the coverage of the same cell as the relay terminal or that the remote terminal is not covered by any cell, the first operation is a second sub-operation; or the first operation is determined based on whether the remote terminal has searched out a target cell, where the target cell is a serving cell covering the relay terminal;
the first operation is determined based on an indication of a minimum system information set; and
the first operation is determined based on whether the remote terminal has established a sidelink connection to the relay terminal, where
the first sub-operation is to acquire system information through a first interface, the first interface is an air interface between the remote terminal and a cell, and the second sub-operation is to acquire system information through the relay terminal.

According to a second aspect, an information sending method is provided and includes:
in a case that a second condition is satisfied, sending, by a relay terminal, at least part of system information to a remote terminal, where
the second condition includes at least one of the following:
   the remote terminal is within coverage of a same cell as the relay terminal, the remote terminal is not within the coverage of the same cell as the relay terminal, or the remote terminal is not covered by any cell;
   a minimum system information set instructs the remote terminal to acquire system information through the relay terminal; and
   the relay terminal has established a sidelink connection to the remote terminal.

According to a third aspect, an information sending method is provided and includes:
sending, by a network-side device, configuration information, where the configuration information is used to configure behavior information of a relay terminal, where
the behavior information includes at least one of the following:
   actively sending, by the relay terminal, a third part of system information to a remote terminal; and
   sending, by the relay terminal, a fourth part of system information to the remote terminal based on a request of the remote terminal.

According to a fourth aspect, an information acquisition apparatus is provided and includes:
a first execution module, configured to perform a first operation, where the first operation satisfies at least one of the following:
in a case that the remote terminal is within coverage of a same cell as a relay terminal, the first operation includes at least a first sub-operation;
in a case that the remote terminal is not within the coverage of the same cell as the relay terminal or that the remote terminal is not covered by any cell, the first operation is a second sub-operation; or the first operation is determined based on whether the remote terminal has searched out a target cell, where the target cell is a serving cell covering the relay terminal;
the first operation is determined based on an indication of a minimum system information set; and
the first operation is determined based on whether the remote terminal has established a sidelink connection to the relay terminal, where
the first sub-operation is to acquire system information through a first interface, the first interface is an air interface between the remote terminal and a cell, and the second sub-operation is to acquire system information through the relay terminal.

According to a fifth aspect, an information sending apparatus is provided and includes:
a second execution module, configured to send at least part of system information to a remote terminal in a case that a second condition is satisfied, where
the second condition includes at least one of the following:
   the remote terminal is within coverage of a same cell as a relay terminal, the remote terminal is not within the coverage of the same cell as the relay terminal, or the remote terminal is not covered by any cell;
   a minimum system information set instructs the remote terminal to acquire system information through the relay terminal; and
   the relay terminal has established a sidelink connection to the remote terminal.

According to a sixth aspect, an information sending apparatus is provided and includes:
a third execution module, configured to send configuration information, where the configuration information is used to configure behavior information of a relay terminal, where
the behavior information includes at least one of the following:
   actively sending, by the relay terminal, a third part of system information to a remote terminal; and
   sending, by the relay terminal, a fourth part of system information to the remote terminal based on a request of the remote terminal.

According to a seventh aspect, a terminal is provided. The terminal includes a processor, a memory, and a program or instructions stored in the memory and capable of running on the processor. When the program or instructions are executed by the processor, the steps of the method according to the first aspect or the second aspect are implemented.

According to an eighth aspect, a network-side device is provided. The network-side device includes a processor, a memory, and a program or instructions stored in the memory and capable of running on the processor. When the program or instructions are executed by the processor, the steps of the method according to the third aspect are implemented.

According to a ninth aspect, a terminal is provided and includes a processor and a communications interface.

In a case that the terminal is a remote terminal, the communications interface is configured to:
perform a first operation, where the first operation satisfies at least one of the following:
in a case that the remote terminal is within coverage of a same cell as a relay terminal, the first operation includes at least a first sub-operation;
in a case that the remote terminal is not within the coverage of the same cell as the relay terminal or that the remote terminal is not covered by any cell, the first operation is a second sub-operation; or the first operation is determined based on whether the remote terminal has searched out a target cell, where the target cell is a serving cell covering the relay terminal;
the first operation is determined based on an indication of a minimum system information set; and
the first operation is determined based on whether the remote terminal has established a sidelink connection to the relay terminal, where
the first sub-operation is to acquire system information through a first interface, the first interface is an air interface between the remote terminal and a cell, and the second sub-operation is to acquire system information through the relay terminal.

In a case that the terminal is a relay terminal, the communications interface is configured to:
send at least part of system information to a remote terminal in a case that a second condition is satisfied, where
the second condition includes at least one of the following:
   the remote terminal is within coverage of a same cell as a relay terminal, the remote terminal is not within the coverage of the same cell as the relay terminal, or the remote terminal is not covered by any cell;
   a minimum system information set instructs the remote terminal to acquire system information through the relay terminal; and
   the relay terminal has established a sidelink connection to the remote terminal.

According to a tenth aspect, a network-side device is provided and includes a processor and a communications interface. The communications interface is configured to:
send configuration information, where the configuration information is used to configure behavior information of a relay terminal, where
the behavior information includes at least one of the following:
   actively sending, by the relay terminal, a third part of system information to a remote terminal; and
   sending, by the relay terminal, a fourth part of system information to the remote terminal based on a request of the remote terminal.

According to an eleventh aspect, a readable storage medium is provided. The readable storage medium stores a program or instructions. When the program or instructions are executed by a processor, the steps of the method according to the first aspect, the second aspect, or the third aspect are implemented.

According to a twelfth aspect, a chip is provided. The chip includes a processor and a communications interface. The communications interface is coupled to the processor. The processor is configured to run a program or instructions to implement the method according to the first aspect, the second aspect, or the third aspect.

According to a thirteenth aspect, a computer program product is provided. The computer program product is stored in a non-volatile storage medium. The computer program product is executed by at least one processor to implement the method according to the first aspect, the second aspect, or the third aspect.

According to a fourteenth aspect, a communications device is provided, and is configured to perform the method according to the first aspect, the second aspect, or the third aspect.

In the embodiments of this application, different scenarios in which the remote terminal can acquire the system information through the first interface and/or the relay terminal are provided, and the first interface is the air interface between the remote terminal and the cell. Therefore, effectiveness of acquiring the system information by the remote terminal can be improved, and service experience of the remote terminal can be improved.

### BRIEF DESCRIPTION OF DRAWINGS

FIG. 1 is a schematic diagram of a wireless communications system according to an embodiment of this application;
FIG. 2 is a schematic diagram of a layer 2 sidelink relay control plane protocol stack according to an embodiment of this application;
FIG. 3 is a schematic diagram of a layer 3 sidelink relay control plane protocol stack according to an embodiment of this application;
FIG. 4 is a flowchart of an information acquisition method according to an embodiment of this application;
FIG. 5 is a first flowchart of an information sending method according to an embodiment of this application;
FIG. 6 is a second flowchart of an information sending method according to an embodiment of this application;
FIG. 7 is a structural diagram of an information acquisition apparatus according to an embodiment of this application;
FIG. 8 is a first structural diagram of an information sending apparatus according to an embodiment of this application;
FIG. 9 is a second structural diagram of an information sending apparatus according to an embodiment of this application;
FIG. 10 is a structural diagram of a communications device according to an embodiment of this application;
FIG. 11 is a structural diagram of a terminal according to an embodiment of this application; and
FIG. 12 is a structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other systems than the NR system, for example, a 6th Generation (6th Generation, 6G) communication system.

For ease of understanding, the following describes some content in the embodiments of this application.

### I. Brief description of a sidelink (Sidelink)

A sidelink is a radio link between terminals in a communications system (for example, new radio (New Radio, NR) or long term evolution (Long Term Evolution, LTE)). Direct data transmission may be implemented between two terminals through a sidelink. A radio link between two terminals may also be referred to as a PC5 link, running the PC5 protocol.

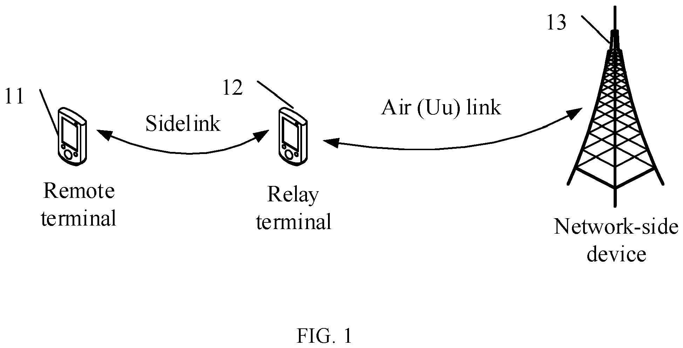

In a communication protocol, research is conducted on use of a terminal to provide a terminal-to-network relay service. As shown in FIG. 1, a wireless communications system may include a remote terminal (remote UE) 11, a relay terminal (relay UE) 12, and a network-side device 13. The relay terminal 12 is a terminal providing a relay service, and the remote terminal 11 is a terminal provided with the relay service; a link between the relay terminal 12 and the remote terminal 11 is a PC5 link running the sidelink interface protocol; a link between the relay terminal 12 and the network-side device 13 is a Uu link running the Uu link (link) protocol, and is used for downlink and uplink (for Downlink and Uplink).

A sidelink radio interface control plane includes the PC5 radio resource control (Radio Resource Control, RRC) protocol. The PC5 RRC protocol runs above a packet data convergence protocol (Packet Data Convergence Protocol, PDCP) layer and a radio link control (Radio Link Control, RLC) layer. The lowest layers are a media access control (Media Access Control, MAC) layer and a physical layer. A sidelink radio interface user plane includes service data adaptation protocol (Service Data Adaptation Protocol, SDAP), PDCP, RLC, MAC, and physical layers from top to bottom.

In the embodiments of this application, the terminal may also be referred to as a terminal device or a user equipment (User Equipment, UE). The terminal may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), a vehicle user equipment (Vehicle User Equipment, VUE), or a pedestrian user equipment (Pedestrian User Equipment, PUE). The wearable device includes a smart watch, a smart band, an earphone, glasses, or the like. It should be noted that a specific type of the terminal is not limited in the embodiments of this application.

The network-side device may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a wireless local area network (Wireless Local Area Network, WLAN) access point, a Wireless Fidelity (Wireless Fidelity, Wi-Fi) node, a transmission and reception point (Transmitting and Reception Point, TRP), or another appropriate term in the art. As long as the same technical effect is achieved, the base station is not limited to specific technical terms. It should be noted that in the embodiments of this application, only a base station in an NR system is used as an example, but a specific type of the base station is not limited.

### II. Brief description of a layer (Layer, L) 2 sidelink relay and an L3 sidelink relay

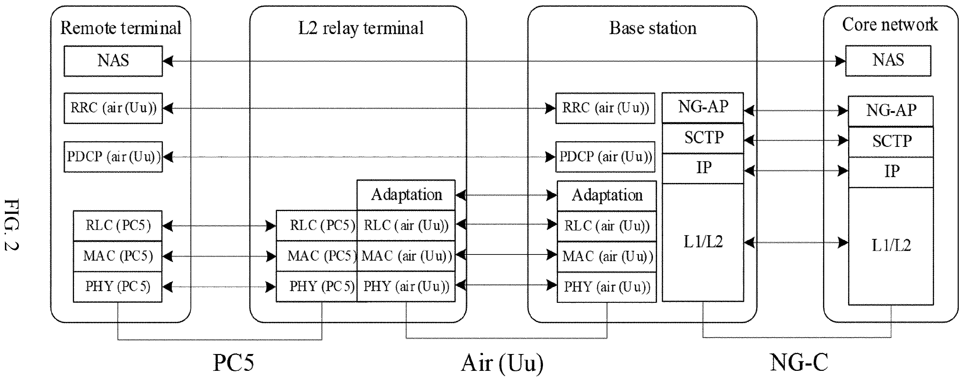

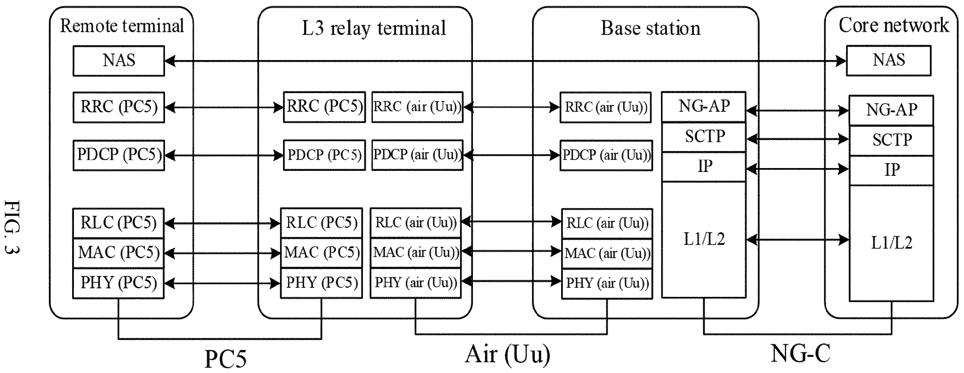

FIG. 2 and FIG. 3 respectively show a backhaul link control plane protocol stack based on a layer 2 sidelink relay and a backhaul link control plane protocol stack based on a layer 3 sidelink relay.

For a backhaul link based on the layer 2 sidelink relay, remote UE has a PC5 RRC connection (only a Uu RRC protocol stack is given in the figure) for controlling a sidelink connection and an RRC connection to a base station for controlling the connection and service provisioning with the base station.

For a backhaul link based on the layer 3 sidelink relay, remote UE has a PC5 RRC connection to relay UE and no Uu RRC connection to the base station. A protocol stack for the layer 3 relay is omitted.

### III. NR system information.

NR system information may include a master information block (Master Information Block, MIB) and a series of system information blocks (System Information Block, SIB).

Based on content included in the system information, the system information may be categorized into minimum system information (Minimum SI) and other system information (Other SI).

The minimum SI includes basic messages for initial access and acquiring other system information, mainly including a MIB and a SIB1.

The MIB includes cell barred information, and physical layer information necessary for acquiring further system information, such as a configuration of a control resource set (Control Resource Set, CORESET) #0. The MIB is carried on a broadcast channel (Broadcast Channel, BCH) and is broadcast periodically.

The SIB1 defines information about an uplink/downlink bandwidth part (Band Width Part, BWP), physical random access channel (Physical Random Access Channel, PRACH) configuration information, a time division duplex (Time Division Duplex, TDD) configuration, and other messages, and scheduling information of other system information blocks. The base station periodically broadcasts the SIB1, or in an RRC_CONNECTED (RRC_CONNECTED state, the UE is notified by using dedicated signaling.

The other SI covers all system information that is not broadcast in the minimum SI. These SIBs may be sent in the following manners: Like the minimum SI, a SIB is periodically broadcast; if the base station does not broadcast the SIB, the UE in an RRC_IDLE (RRC_IDLE) or RRC_INACTIVE (RRC_INACTIVE) state may request, based on a configuration of system information scheduling information in the SIB1, the base station to broadcast the SIB, and receive the SIB; and in an RRC_CONNECTED state, the SIB is sent to the UE on a downlink shared channel (Downlink Shared Channel, DL-SCH) in a dedicated manner. The other SI mainly includes the following information:
SIB2: indicates cell reselection information;
SIB3: indicates frequency information of a serving cell and intra-frequency neighboring cell information for cell reselection, including a frequency parameter for cell reselection;
SIB4: indicates other NR inter-frequency neighboring cell information, including a common frequency parameter for cell reselection, a parameter dedicated to cell reselection, and the like;
SIB5: indicates LTE system frequency information and cell information, including a common frequency parameter for cell reselection;
SIB6 and SIB7: include notification information and assistance information of an earthquake and tsunami warning system (Earthquake and Tsunami Warning System, ETWS);
SIB8: indicates a notification message of a commercial mobile alert system (Commercial Mobile Alert System, CMAS);
SIB9: indicates information about a global positioning system (Global Positioning System, GPS) time and a coordinated universal time (Coordinated Universal Time, UTC);
SIB 10: indicates a non-public network (Non-Public Network, NPN) related configuration;
SIB 11: indicates a measurement configuration of the UE in the RRC_IDLE and RRC_INACTIVE states;
SIB 12: indicates an NR sidelink configuration; and
SIB 13 and SIB 14: indicate configurations related to an LTE vehicle to everything (Vehicle to X, V2X) wireless communications technology.

The following describes in detail the embodiments of this application by using some embodiments and application scenarios thereof with reference to the accompanying drawings.

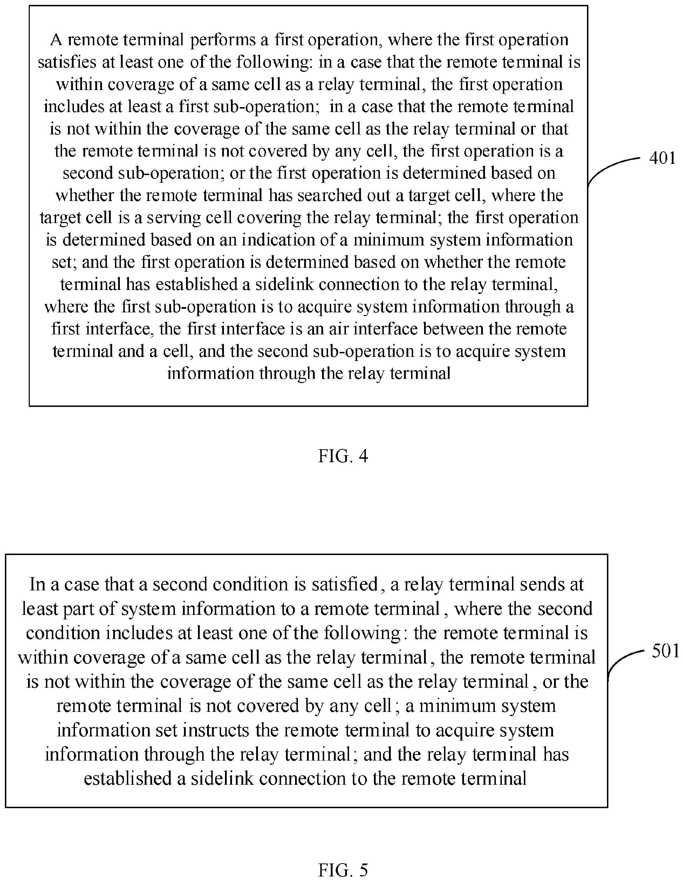

FIG. 4 is a flowchart of an information acquisition method according to an embodiment of this application. The information acquisition method in FIG. 4 may be performed by a remote terminal.

As shown in FIG. 4, the information acquisition method may include the following step.

Step 401: The remote terminal performs a first operation.

In this embodiment of this application, the first operation may specifically include at least one of the following:
a first sub-operation, where the first sub-operation is to acquire system information through a first interface, and the first interface is an air interface, such as a Uu interface, between the remote terminal and a cell; and
a second sub-operation, where the second sub-operation is to acquire system information through a relay terminal.

In other words, in this embodiment of this application, the remote terminal may acquire the system information through the first interface and/or the relay terminal. Further, the system information may include but is not limited to, system information of a target cell, where the target cell is a serving cell covering the relay terminal.

It should be noted that, in a case that at least two pieces of system information are to be acquired through the relay terminal, for different system information, the remote terminal may acquire the system information through the relay terminal in different manners. For example, system information a may be sent by the relay terminal actively; system information b may be sent by the relay terminal based on a request of the remote terminal; system information c may be broadcast directly by the relay terminal; and system information d may be forwarded by the relay terminal.

In this embodiment of this application, a specific representation form of the first operation may be determined, without limitation, based on at least one of the following: whether the remote terminal is covered by a cell; whether the remote terminal is within coverage of a same cell as the relay terminal; an indication of a minimum system information set; and whether the remote terminal has established a sidelink connection to the relay terminal. Detailed descriptions are as follows:

Optionally, the first operation may satisfy, without limitation, at least one of the following:
(1) in a case that the remote terminal is within the coverage of the same cell as the relay terminal, the first operation includes at least the first sub-operation;
(2) in a case that the remote terminal is not within the coverage of the same cell as the relay terminal or that the remote terminal is not covered by any cell, the first operation is the second sub-operation; or the first operation is determined based on whether the remote terminal has searched out the target cell, where the target cell is the serving cell (serving cell) covering the relay terminal;
(3) the first operation is determined based on the indication of the minimum system information set; and
(4) the first operation is determined based on whether the remote terminal has established the sidelink connection to the relay terminal.

In this embodiment of this application, whether the remote terminal is within the coverage of the same cell as the relay terminal may be determined, without limitation, in the following manner: determining whether identification information of a first serving cell of the first interface is the same as identification information of a second serving cell of the relay terminal. In a specific implementation, if the identification information of the first serving cell is the same as the identification information of the second serving cell, it indicates that the remote terminal is within the coverage of the same cell as the relay terminal; otherwise, it indicates that the remote terminal is not within the coverage of the same cell as the relay terminal.

In (1), the first operation may include only the first sub-operation, or may include the first sub-operation and the second sub-operation. In other words, the remote terminal may acquire at least part of system information through the first interface, and another part of system information may be acquired through the first interface or the relay terminal. This may be specifically determined based on an actual situation, and is not limited in this embodiment of this application.

In (2), in a first implementation, the remote terminal may acquire all system information through the relay terminal. In a second implementation, a specific representation form of the first operation may be determined based on whether the remote terminal has searched out the target cell. In the second implementation, the remote UE may first search for the target cell, and then determine, based on a search result, whether to acquire the system information through the first interface or the relay terminal.

In (3), a specific representation form of the first operation may be determined based on the indication of the minimum system information set. It may be understood that, in this case, the remote terminal acquires system information other than the minimum system information set based on the first operation. The remote terminal may acquire the minimum system information set through the first interface or the relay terminal.

In a specific implementation, the minimum system information set may include: indication information indicating a manner or a path for the remote terminal to acquire the system information other than the minimum system information set. Optionally, the indication information may be independent system information in the minimum system information set, or may be carried in any system information in the minimum system information set. This may be specifically determined based on an actual situation, and is not limited in this embodiment of this application.

In this case, the manner of acquiring the system information by the remote terminal may be consistent with the system information acquisition manner indicated by the minimum system information set. Optionally, the first operation may satisfy at least one of the following:

In a case that the minimum system information set instructs to acquire the system information through the relay terminal, the first operation is the second sub-operation;
in a case that the minimum system information set instructs to acquire the system information through the first interface, the first operation is the first sub-operation; or
in a case that the minimum system information set instructs to acquire the system information through the first interface and the relay terminal, the first operation includes the first sub-operation and the second sub-operation.

Optionally, in the case that the minimum system information set instructs to acquire the system information through the first interface and the relay terminal, the minimum system information set may further indicate which system information is to be acquired through the first interface and/or which system information is to be acquired through the relay terminal, so that effectiveness of acquiring the corresponding system information by the remote terminal can be further improved.

In an actual application, a network-side device may flexibly set the indication of the minimum system information set based on an actual situation.

In (4), a specific representation form of the first operation may be determined based on whether the remote terminal has established the sidelink connection to the relay terminal.

Optionally, the first operation may satisfy at least one of the following:
in a case that the remote terminal has established the sidelink connection to the relay terminal, the first operation is the second sub-operation; or
in a case that the remote terminal has not established the sidelink connection to the relay terminal, the first operation is the first sub-operation.

It should be noted that (4) is applicable to at least one of the following cases: the remote terminal is within the coverage of the same cell as the relay terminal; the remote terminal is not within the coverage of the same cell as the relay terminal; and the remote terminal is not covered by any cell.

The information acquisition method in this application provides different scenarios in which the remote terminal can acquire the system information through the first interface and/or the relay terminal, and the first interface is the air interface between the remote terminal and the cell. Therefore, effectiveness of acquiring the system information by the remote terminal can be improved, and service experience of the remote terminal can be improved.

The following describes (1) in detail.

Optionally, in a case that the first operation includes at least the first sub-operation, a first part of system information in the system information is acquired through the first interface, and a second part of system information in the system information is acquired through at least one of the first interface and the relay terminal.

In a specific implementation, system information specifically included in the first part of system information and the second part of system information may be predetermined, for example, may be prescribed by a protocol or configured by the network-side device. Further, the first part of system information and the second part of system information may be flexibly adjusted based on an actual situation. This may be specifically determined based on an actual situation, and is not limited in this embodiment of this application.

Optionally, the first part of system information may include but is not limited to at least one of the following:
the minimum system information set;
a master information block MIB and a system information block 1 SIB 1;
system information broadcast by the target cell;
system information not forwarded by the relay terminal; and
system information requested by the remote terminal.

In a specific implementation, the system information not forwarded by the relay terminal may include at least one of the following: system information whose forwarding is not supported by the relay terminal; and system information unforwarded by the relay terminal.

The system information requested by the remote terminal may include but is not limited to at least one of the following: system information related to a sidelink; and system information related to a sidelink relay.

Optionally, the second part of system information may include but is not limited to at least one of the following:
the minimum system information set or at least part of system information other than the minimum system information set;
at least part of system information not broadcast by the target cell;
at least part of system information whose forwarding is supported by the relay terminal;
at least part of system information provided by the target cell; and
at least part of updated system information.

In this embodiment of this application, the at least part may be understood as a part or all.

In a specific implementation, the at least part of system information whose forwarding is supported by the relay terminal may be indicated by first information sent by the relay terminal, and the first information is carried in a broadcast message, a multicast message, or dedicated signaling. In other words, the relay terminal may indicate, by broadcast, multicast, unicast, or the like, the system information whose forwarding is supported by the relay terminal.

The system information that can be provided by the target cell may be indicated by the SIB1, and the remote terminal may acquire the SIB1 through the first interface or the relay terminal.

Optionally, the at least part of updated system information may be indicated, without limitation, by at least one of the following: the minimum system information set; a sidelink discovery signal; a sidelink relay discovery signal; a broadcast message of the relay terminal; and a multicast message of the relay terminal. In other words, the updated system information may be indicated by the relay terminal, or indicated by the system information in the minimum system information set, the sidelink discovery signal, or the sidelink relay discovery signal.

It should be noted that the first part of system information and the second part of system information include non-overlapping information. For example, the first part of system information and the second part of system information include different system information respectively, or the first part of system information and the second part of system information include different parts of the same system information respectively.

For example, in a case that the first part of system information includes the minimum system information set, the second part of system information includes the system information other than the minimum system information set; or in a case that the second part of system information includes the minimum system information set, the first part of system information includes the system information other than the minimum system information set. In this embodiment of this application, the remote terminal may acquire the minimum system information set through the first interface or the relay terminal.

In this optional implementation, the second part of system information in the system information may be acquired through at least one of the first interface and the relay terminal. In a specific implementation, a specific manner of acquiring the second part of system information may be prescribed by a protocol or configured by the network-side device. This may be determined based on an actual situation, and is not limited in this embodiment of this application.

Optionally, the acquisition of the second part of system information may satisfy at least one of the following:
(a) the remote terminal acquires the second part of system information through the first interface or the relay terminal;
(b) the remote terminal acquires the second part of system information through at least one of the first interface and the relay terminal in descending order of system information acquisition priorities of the first interface and the relay terminal;
(c) in a case that the second part of system information fails to be acquired through the first interface, the remote terminal acquires the second part of system information through the relay terminal; and
(d) in a case that the second part of system information fails to be acquired through the relay terminal, the remote terminal acquires the second part of system information through the first interface.

In (a), all system information in the second part of system information is acquired through the first interface or relay terminal. A manner of acquiring the second part of system information in (a) may be prescribed by a protocol, but this is not limited.

In (b), a priority of each acquisition path may be prescribed by a protocol or indicated by the network-side device, and then part or all of the system information in the second part of system information is preferentially acquired by using an acquisition path with a highest priority in descending order of priorities of acquisition paths.

In (c) and (d), an acquisition path may be predetermined for acquiring the system information preferentially, and after the system information fails to be acquired by using the acquisition path, any other acquisition path is tried for acquiring the system information, until the system information is successfully acquired.

The following describes in detail the second implementation in (2).

Optionally, in a case that the first operation is determined based on whether the remote terminal has searched out the target cell, the first operation satisfies at least one of the following:
in a case that a first condition is satisfied, the first operation includes at least the first sub-operation; and
in a case that the first condition is not satisfied, the first operation is the second sub-operation, where
the first condition includes that the remote terminal has searched out the target cell and that the remote terminal is within coverage of the target cell.

In this optional implementation, in a case that the remote terminal has searched out the target cell and that the remote terminal is within the coverage of the target cell, a representation form of the first operation is the same as the representation form of the first operation in (1), and is not described herein again. For details, refer to the foregoing description.

In a case that the remote terminal has not searched out the target cell, or in a case that the remote terminal has searched out the target cell but the remote terminal is not within the coverage of the target cell, the remote terminal may acquire all the system information through the relay terminal.

The following describes in detail a case that the remote terminal acquires the system information through the relay terminal.

### I. The manner in which the remote terminal acquires the system information through the relay terminal

In this embodiment of this application, a behavior of the relay terminal sending the system information to the remote terminal may include at least one of the following: the relay terminal actively sends the system information to the remote terminal; and the relay terminal sends the system information to the remote terminal based on a request of the remote terminal, that is, after the relay terminal receives the request of the remote terminal, the relay terminal sends the system information to the remote terminal in response to the request.

Further, in a case that the relay terminal actively sends the system information to the remote terminal, the relay terminal may send the system information by broadcast, multicast, or unicast.

In an implementation, the behavior of the relay terminal sending the system information to the remote terminal may be prescribed by a protocol or configured by the network-side device. This may be determined based on an actual situation, and is not limited in this embodiment of this application. The system information actively sent by the relay terminal and the system information sent based on the request may be predetermined by a protocol or configured by the network-side device, or the like. The system information actively sent by the relay terminal may partially overlap or may not overlap the system information sent based on the request. This may be specifically determined based on an actual situation, and is not limited in this embodiment of this application.

Optionally, in a case that the first operation is the second sub-operation, at least part of system information in the system information is broadcast or multicast by the relay terminal.

In other words, in the case that the remote terminal acquires the system information through the relay terminal, the remote terminal may broadcast or multicast the at least part of system information. Further, the remote terminal may also send or forward other parts of system information by using a PC5 message.

Optionally, a broadcast period or a multicast period of the at least part of system information may be an integer multiple of a sending period of the sidelink relay discovery signal. Further, the broadcast period or the multicast period of the at least part of system information may be equal to the sending period of the sidelink relay discovery signal, and a broadcast or multicast offset of the at least part of system information may be equal to an offset of the sidelink relay discovery signal.

In a specific implementation, the broadcasting or multicasting of the at least part of system information may be implemented in a plurality of manners. Optionally, the broadcasting or multicasting of the at least part of system information may include at least one of the following:
the at least part of system information is sent by using a sidelink relay discovery signal resource pool (discovery resource pool) or a sidelink discovery signal resource pool; and
the at least part of system information is sent by using a sidelink data communication resource pool (communication resource pool).

In an implementation, a specific manner of implementing the broadcasting or multicasting of the at least part of system information may be configured by the target cell, prescribed (predefined) by a protocol, or preconfigured.

For example, sending by using the sidelink relay discovery signal resource pool, the sidelink discovery signal resource pool, or the sidelink data communication resource pool may be predefined.

At least one of the following may be configured for the target cell:
when the sidelink relay discovery signal resource pool or the sidelink discovery signal resource pool is configured for the target cell, sending the at least part of system information by using the sidelink relay discovery signal resource pool or the sidelink discovery signal resource pool; and
when the sidelink relay discovery signal resource pool or the sidelink discovery signal resource pool is not configured for the target cell, sending the at least part of system information by using the sidelink data communication resource pool.

II. The system information acquired by the remote terminal through the relay terminal

Optionally, in a case that the first operation includes the second sub-operation, the system information acquired by the remote terminal through the relay terminal may include but is not limited to at least one of the following:
(i) valid system information stored in the relay terminal;
(ii) first system information requested by the relay terminal from the target cell based on a system information request of the remote terminal; and
(iii) second system information requested by the remote terminal from the target cell through the relay terminal.

In (i), the valid system information may be understood as system information of a latest updated version.

In (ii), the first system information is transmitted non-transparently through the relay terminal. After the target cell receives a request sent by the relay terminal for the first system information, the target cell may send the first system information to the remote terminal through the first interface, and the remote terminal may receive the first system information through the first interface.

In (iii), the first system information is transmitted transparently through the relay terminal. After the target cell receives a request forwarded by the relay terminal for the second system information, the target cell may send the second system information to the remote terminal through the relay terminal, and the remote terminal may receive the second system information forwarded by the relay terminal.

Main differences between (ii) and (iii) are as follows: In (ii), the remote terminal knows content of the request of the relay terminal, while in (iii), the remote terminal does not know content of the request of the relay terminal; and in (ii), the first system information is directly transmitted between the target cell and the remote terminal and no other device is required for forwarding, while in (iii), the second system information is forwarded by the relay terminal.

Optionally, the valid system information in (i) or the second system information in (iii) may be carried by a sidelink radio resource control RRC message sent by the relay terminal or a sidelink RRC container sent by the relay terminal.

In other words, the relay terminal may send the valid system information or the second system information by using the sidelink RRC message or the sidelink RRC container. Certainly, in another implementation, the relay terminal may broadcast or multicast the valid system information or the second system information.

Optionally, in a case that the system information includes the first system information, that the remote terminal performs a first operation may include:
the remote terminal sends a first request to the relay terminal, where the first request is used to request the first system information; and
the remote terminal receives the first system information through the first interface.

In a specific implementation, after the relay terminal receives the first request, the relay terminal may send the first request to the target cell, so that the target cell sends the first system information to the remote terminal through the first interface.

Optionally, the first system information is broadcast by the target cell, or sent by the target cell over an RRC connection between the target cell and the remote terminal. In other words, the target cell may send the first system information to the remote terminal over the RRC connection, or may broadcast the first system information.

Optionally, in a case that the system information includes the second system information, that the remote terminal performs a first operation includes:
the remote terminal sends a second request to the target cell through the relay terminal, where the second request is used to request the second system information; and
the remote terminal receives the second system information through the relay terminal.

In a specific implementation, after receiving the second request, the relay terminal may forward the second request to the target cell; and after receiving the second request, the target cell may send the second system information to the relay terminal, so that the relay terminal forwards the second system information to the remote terminal.

In this embodiment of this application, which information is specifically included in the minimum system information set may be predetermined, for example, may be prescribed by a protocol or configured by the network-side device. Optionally, the minimum system information set may include but is not limited to at least one of the following:
at least part of information in a MIB;
at least part of information in a SIB 1;
at least part of information in a system information block 12 SIB 12;
configuration information of a sidelink resource pool, where the sidelink resource pool includes at least one of the following: a sidelink data transmission resource pool, a sidelink relay discovery signal resource pool, and a sidelink discovery signal resource pool;
a system information block SIB related to the configuration information; and
reference signal received power (Reference Signal Received Power, RSRP) threshold information of the remote terminal.

In this embodiment of this application, optionally, the system information may include at least one of the following: system information corresponding to N broadcast groups; and system information corresponding to M multicast groups, where both N and M are positive integers.

In a specific implementation, system information corresponding to a broadcast group may be understood as system information defined or configured in the broadcast group. System information corresponding to a multicast group is understood similarly and is not described.

In this optional implementation, system information may be defined or configured in at least one broadcast group and/or at least one multicast group. The system information corresponding to the broadcast group may be sent by broadcast. The system information corresponding to the multicast group may be sent by multicast. In this way, the sending of the system information can be standardized.

Optionally, the minimum system information set may be defined as a broadcast group, and other system information may be defined as at least one broadcast group; or the minimum system information set may be defined as a broadcast group, and other system information may be defined as at least one multicast group. In a specific implementation, when a multicast group is defined, system information corresponding to the multicast group may be defined based on a requirement of a terminal.

In this embodiment of this application, optionally, in a case that the system information includes updated system information, that the remote terminal performs a first operation may include at least one of the following:
in a case that the updated system information is broadcast by the relay terminal, the remote terminal receives the updated system information through the relay terminal;
in a case that the updated system information is sent by the relay terminal by using a dedicated sidelink RRC message, the remote terminal receives the system information carried by the dedicated sidelink RRC message;
in a case that the updated system information is broadcast by the target cell and that the remote terminal is within coverage of the target cell, the remote terminal receives the updated system information through the first interface; and
in a case that the updated system information is not broadcast by the relay terminal and that the remote terminal is not within coverage of the target cell, the remote terminal may request the updated system information from the target cell through the relay terminal, that is, the updated system information may be transmitted transparently through the relay terminal.

As can be learned, in this embodiment of this application, the updated system information may be broadcast, multicast, or unicast by the relay terminal to the remote terminal, or may be broadcast by the target cell to the remote terminal. Therefore, flexibility of sending the updated system information can be improved.

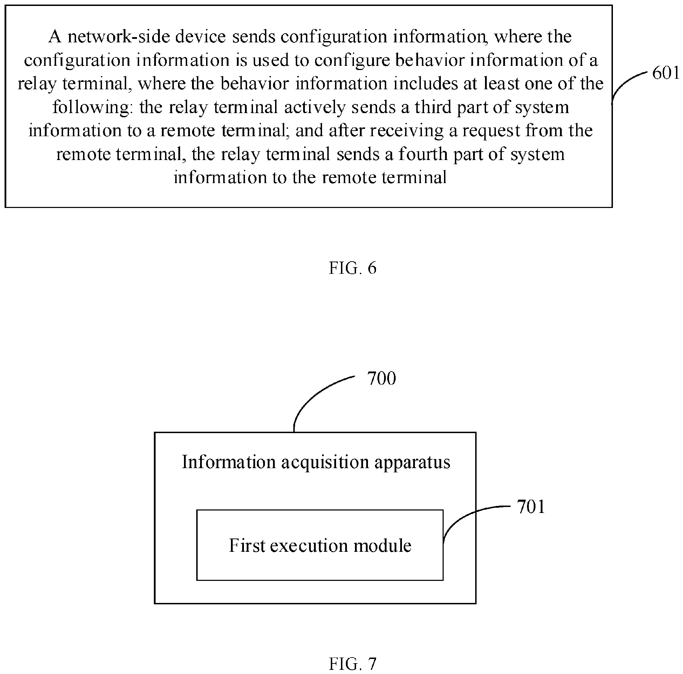

FIG. 5 is a first flowchart of an information sending method according to an embodiment of this application. The information sending method in FIG. 6 is performed by a relay terminal. As shown in FIG. 5, the information sending method may include the following step.

Step 501: In a case that a second condition is satisfied, the relay terminal sends at least part of system information to a remote terminal, where
the second condition includes at least one of the following:
the remote terminal is within coverage of a same cell as the relay terminal, the remote terminal is not within the coverage of the same cell as the relay terminal, or the remote terminal is not covered by any cell;
a minimum system information set instructs the remote terminal to acquire system information through the relay terminal; and
the relay terminal has established a sidelink connection to the remote terminal.

The information sending method in this embodiment provides different application scenarios in which the relay terminal provides system information for the remote terminal. Therefore, effectiveness of acquiring the system information by the remote terminal can be improved, and service experience of the remote terminal can be improved.

Optionally, the second condition further includes at least one of the following:
a system information acquisition priority of the relay terminal is higher than a system information acquisition priority of a first interface, where the first interface is an air interface between the remote terminal and a cell; and
the remote terminal fails to acquire a second part of system information through the first interface.

Optionally, the at least part of system information includes at least one of the following:
the minimum system information set or at least part of system information other than the minimum system information set;
at least part of system information not broadcast by a target cell;
at least part of system information whose forwarding is supported by the relay terminal;
at least part of system information provided by the target cell;
at least part of updated system information;
valid system information stored in the relay terminal; and
second system information requested by the remote terminal from the target cell through the relay terminal.

Optionally, the at least part of system information whose forwarding is supported by the relay terminal is indicated by first information sent by the relay terminal, and the first information is carried in a broadcast message, a multicast message, or dedicated signaling.

Optionally, the at least part of updated system information is indicated by at least one of the following: the minimum system information set; a sidelink discovery signal; a sidelink relay discovery signal; a broadcast message of the relay terminal; and a multicast message of the relay terminal.

Optionally, the valid system information or the second system information is carried by a sidelink radio resource control RRC message sent by the relay terminal or a sidelink RRC container sent by the relay terminal.

Optionally, in a case that the at least part of system information includes the second system information, that the relay terminal sends at least part of system information to a remote terminal includes:
the relay terminal receives a second request sent by the remote terminal, where the second request is used to request the second system information;
the relay terminal forwards the second request to the target cell;
the relay terminal receives the second system information sent by the target cell; and
the relay terminal forwards the second system information to the remote terminal.

Optionally, the at least part of system information is broadcast or multicast by the relay terminal.

Optionally, a broadcast period or a multicast period of the at least part of system information is an integer multiple of a sending period of a sidelink relay discovery signal.

Optionally, that the at least part of system information is broadcast or multicast includes at least one of the following:
the at least part of system information is sent by using a sidelink relay discovery signal resource pool or a sidelink discovery signal resource pool; and
the at least part of system information is sent by using a sidelink data communication resource pool.

Optionally, the minimum system information set includes at least one of the following:
at least part of information in a MIB;
at least part of information in a SIB 1;
at least part of information in a system information block 12 SIB 12;
configuration information of a sidelink resource pool, where the sidelink resource pool includes at least one of the following: a sidelink data transmission resource pool, a sidelink relay discovery signal resource pool, and a sidelink discovery signal resource pool;
a system information block SIB related to the configuration information; and
reference signal received power RSRP threshold information of the remote terminal.

Optionally, the at least part of system information includes at least one of the following: system information corresponding to N broadcast groups; and system information corresponding to M multicast groups, where both N and M are positive integers.

It should be noted that this embodiment serves as a relay terminal embodiment corresponding to the method embodiment in FIG. 4. Therefore, reference can be made to related descriptions in the method embodiment in FIG. 4, with the same beneficial effect achieved. To avoid repetition, details are not described herein again.

FIG. 6 is a second flowchart of an information sending method according to an embodiment of this application. The information sending method in FIG. 6 is performed by a network-side device. The network-side device may be a network-side device to which a target cell belongs. As shown in FIG. 6, the information sending method may include the following step.

Step 601: The network-side device sends configuration information, where the configuration information is used to configure behavior information of a relay terminal, where
the behavior information includes at least one of the following:
the relay terminal actively sends a third part of system information to a remote terminal; and
after receiving a request from the remote terminal, the relay terminal sends a fourth part of system information to the remote terminal.

In the information sending method in this embodiment, the network-side device can configure a behavior of the relay terminal sending system information to the remote terminal. Therefore, effectiveness of acquiring the system information by the remote terminal can be improved, and service experience of the remote terminal can be improved.

Optionally, that the relay terminal actively sends a third part of system information to a remote terminal includes:
the relay terminal actively broadcasts or multicasts the third part of system information to the remote terminal.

Optionally, a broadcast period or a multicast period of the third part of system information is an integer multiple of a sending period of a sidelink relay signal.

Optionally, the third part of system information includes at least one of the following:
a minimum system information set;
a master information block MIB and a system information block 1 SIB 1;
system information broadcast by the target cell;
system information not forwarded by the relay terminal; and
system information requested by the remote terminal.

Optionally, the fourth part of system information includes at least one of the following:
a minimum system information set or at least part of system information other than the minimum system information set;
at least part of system information not broadcast by the target cell;
at least part of system information whose forwarding is supported by the relay terminal;
at least part of system information provided by the target cell; and
at least part of updated system information.

It should be noted that this embodiment serves as a network-side device embodiment corresponding to the method embodiment in FIG. 4. Therefore, reference can be made to related descriptions in the method embodiment in FIG. 4, with the same beneficial effect achieved. To avoid repetition, details are not described herein again.

Various optional implementations described in this embodiment of this application may be implemented in combination or may be implemented independently. This is not limited in this embodiment of this application.

For ease of understanding, the following uses an example for description.

In the following example, the first interface is represented as a Uu interface, and the system information is referred to as system information.

This embodiment of this application may include the following content:
(1) When remote UE is within coverage of a same cell as relay UE, at least the minimum system information set is acquired through the Uu interface, and other system information may be acquired through the Uu interface and/or acquired through the relay UE. Specifically, the following manners are included:
   A protocol prescribes that other system information is acquired only through the Uu interface or only through the relay UE;
   a network configuration indicates which acquisition path is preferential, for example, acquiring through the Uu interface is preferential, or acquiring through the relay UE is preferential; and
   if the remote UE fails to acquire other system information through the Uu interface, the remote UE may try acquiring through the relay UE; or if the remote UE fails to acquire other system information through the relay UE, the remote UE may try acquiring through the Uu interface.
(2) When the remote UE is not within the coverage of the same cell as the relay UE or the remote UE is not covered by any cell, at least part of system information (for example, the minimum system information set) is acquired through the relay UE, and other system information is transparently transmitted or non-transparently transmitted by the relay UE.
(3) The remote UE determines, based on an indication in the minimum system information set, whether to request and/or acquire other system information than the minimum system information set through the relay UE.
(4) When the remote UE is not within the coverage of the same cell as the relay UE, the remote UE determines, based on whether the remote UE has established a PC5 connection to the relay UE, to acquire system information through the Uu interface or the relay UE.
(5) About broadcast/multicast configuration of system information.

The definition of the "minimum system information set" may further include a SIB 12 and/or a SIBX related to a discovery configuration (the SIBX may be the same as the SIB 12 or is a newly introduced SIB), in addition to the MIB+SIB1.

### Embodiment 1: Reading system information when the remote UE is within the coverage of the same cell as the relay UE

In this case, the remote UE preferentially acquires all system information or part of system information through the Uu interface.

That the remote UE preferentially acquires part of system information through the Uu interface includes at least one of the following cases.
(a) The remote UE preferentially acquires the MIB and SIB1 information through the Uu interface.
(b) The remote UE preferentially acquires, through the Uu interface, other information being broadcast by the target cell.
(c) If the target cell does not broadcast system information related to a sidelink or a sidelink relay, but provides request-based sending of the system information related to the sidelink or sidelink relay, the remote UE preferentially requests and receives the system information related to the sidelink or sidelink relay on the Uu interface.
(d) The remote UE has not established a PC5 connection to the relay UE, and preferentially acquires part or all of the system information through the Uu interface.

The part of system information that the remote UE may acquire through the relay UE includes at least one of the following:
i. the part of system information other than the minimum system information set;
ii. the part of system information not broadcast by the target cell;
iii. the part of system information whose forwarding is supported, as indicated by the relay UE in a broadcast/multicast message or dedicated signaling;
iv. the part of system information provided by the target cell, as indicated in a SIB 1 received by the remote UE through the Uu interface;
v. the part of system information provided by the target cell, as indicated in a SIB1 received by the remote UE through the relay UE; and
vi. updated system information acquired by the remote UE through the relay UE if the system information is updated after the remote UE establishes a sidelink connection to the relay UE; and
vii. updated system information indicated by the minimum system information set in a case that no sidelink relay is established; or an indication of the relay UE in a case that a sidelink connection is established.

That the system information is acquired through the relay UE includes at least one of the following:
1. the relay UE stores valid system information, and sends the valid system information to the remote UE by using a PC5-RRC message or a PC5-RRC container;
2. after the relay UE receives a request for target system information through PC5-RRC signaling from the remote UE, the relay UE initiates the request for the target system information to the target cell, and after the relay UE receives the target system information from the target cell, the relay UE sends the target system information to the remote UE by using a PC5-RRC message or a PC5-RRC container; and
3. the relay UE forwards a target system information request received from the remote UE to the target cell, and the target cell sends the target system information to the remote UE over an RRC connection between the target cell and the remote UE, or the target cell broadcasts the target system information on the Uu interface and the remote UE acquires the target system information on the Uu interface. Optionally, when sending the system information request to the target cell through the relay UE, the remote UE may indicate whether the remote UE is within the coverage of the target cell.

In an implementation, in addition to the minimum system information set sent or broadcast by the relay UE to the remote UE, the remote UE should acquire other system information through the foregoing (3).

The minimum system information set includes at least one of the following system information:
all or part of information in the MIB;
all or part of information in the SIB1;
a sidelink resource pool configuration, including at least one of the following: one or more related configurations of a sidelink data transmission resource pool configuration, a sidelink relay discovery signal resource pool configuration, and a sidelink discovery signal resource pool configuration; and
an RSRP threshold configuration of the remote UE.

### Embodiment 2: Reading system information when the remote UE is not within the coverage of the same cell as the relay UE or not covered by any cell

In this case, the remote UE may perform processing in one of the following two manners.
1. The remote UE first searches for the cell in which the relay UE is located (that is, the target cell), and after searching out the target cell, may acquire the system information by using the method in Embodiment 1 when the remote UE is within the coverage of the same cell as the relay UE.
2. The remote UE may acquire, directly through the relay UE, system information including the minimum system information set and other system information.

For 2, the relay UE may broadcast or multicast at least part of system information, for example, the minimum system information set. The other system information may be acquired according to the description about acquisition of part of system information in Embodiment 1.

A broadcast period or a multicast period of at least part of the system information set may be an integer multiple of a period of a relay discovery signal. In particular, the period of the at least part of the system information set and an offset thereof may be the same as those of the relay discovery signal.

Use of a relay discovery signal resource pool (that is, a discovery resource pool) or a sidelink data communication resource pool (communication resource pool) for sending may be predefined for broadcasting or multicasting the at least part of the system information set, or the relay UE may be configured by a target base station as follows:

When the relay discovery signal resource pool is configured by the base station, the at least part of the system information set is sent by using the relay discovery signal resource pool.

When the relay discovery signal resource pool is not configured by the base station, the at least part of the system information set is sent by using the sidelink data communication resource pool.

Correspondingly, the remote UE should receive the at least part of the system information set in the corresponding resource pool.

### Embodiment 3: Sending system information by broadcast or multicast

In this embodiment, the following broadcast/multicast may be defined: defining or configuring all system information as a single broadcast or multicast group identified by a target L2 identity (ID); or dividing and configuring the system information into a plurality of broadcast or multicast groups. The following is an example of broadcasting or multicasting system information in groups.

Example 1: The minimum system information set is defined as a broadcast group, and the other system information is defined as one or more broadcast groups.

Example 2: Sending by broadcast and multicast in combination: The minimum system information set is configured to send by broadcast, while other system information may be configured to send by multicast based on a type of target UE.

### Embodiment 4: Sending or forwarding system information by the relay UE

In a possible implementation, the relay UE broadcasts part of system information, and other system information is sent on demand. For periodic broadcasting of system information, refer to the related part in Embodiment 2.

The broadcast system information is targeted at all remote UEs. When the system information is changed, the relay UE sends a broadcast message to the remote UE to notify the remote UE of the related system information change. There are the following reception manners.

If the changed system information is broadcast by the relay UE, the remote UE may autonomously receive the changed system information.

If the changed system information is broadcast by the target cell, and the remote UE is within the coverage of the target cell, the remote UE may autonomously receive the system information sent on the Uu interface.

If the relay UE does not broadcast the system information, and the remote UE is not covered by any cell or is not within coverage of the same cell as the relay UE, the remote UE requests and receives the system information from the relay UE.

In this embodiment of this application, the remote UE may acquire the system information of the target cell, to assist in establishing a wireless backhaul link and improving service experience of the remote UE.

It should be noted that the information acquisition method provided in this embodiment of this application may be performed by an information acquisition apparatus or a control module for performing the information acquisition method in the information acquisition apparatus. An information acquisition apparatus provided in an embodiment of this application is described by assuming that the information acquisition method in this embodiment of this application is performed by the information acquisition apparatus.

FIG. 7 is a structural diagram of an information acquisition apparatus according to an embodiment of this application.

As shown in FIG. 7, the information acquisition apparatus 700 includes:
a first execution module 701, configured to perform a first operation, where the first operation satisfies at least one of the following:
in a case that the remote terminal is within coverage of a same cell as a relay terminal, the first operation includes at least a first sub-operation;
in a case that the remote terminal is not within the coverage of the same cell as the relay terminal or that the remote terminal is not covered by any cell, the first operation is a second sub-operation; or the first operation is determined based on whether the remote terminal has searched out a target cell, where the target cell is a serving cell covering the relay terminal;
the first operation is determined based on an indication of a minimum system information set; and
the first operation is determined based on whether the remote terminal has established a sidelink connection to the relay terminal, where
the first sub-operation is to acquire system information through a first interface, the first interface is an air interface between the remote terminal and a cell, and the second sub-operation is to acquire system information through the relay terminal.

Optionally, in a case that the first operation includes at least the first sub-operation, a first part of system information in the system information is acquired through the first interface, and a second part of system information in the system information is acquired through at least one of the first interface and the relay terminal.

Optionally, the acquisition of the second part of system information satisfies at least one of the following:
the remote terminal acquires the second part of system information through the first interface or the relay terminal;
the remote terminal acquires the second part of system information through at least one of the first interface and the relay terminal in descending order of system information acquisition priorities of the first interface and the relay terminal;
in a case that the second part of system information fails to be acquired through the first interface, the remote terminal acquires the second part of system information through the relay terminal; and
in a case that the second part of system information fails to be acquired through the relay terminal, the remote terminal acquires the second part of system information through the first interface.

Optionally, the first part of system information includes at least one of the following:
the minimum system information set;
a master information block MIB and a system information block 1 SIB 1;
system information broadcast by the target cell;
system information not forwarded by the relay terminal; and
system information requested by the remote terminal.

Optionally, the second part of system information includes at least one of the following:
the minimum system information set or at least part of system information other than the minimum system information set;
at least part of system information not broadcast by the target cell;
at least part of system information whose forwarding is supported by the relay terminal;
at least part of system information provided by the target cell; and
at least part of updated system information.

Optionally, the at least part of updated system information is indicated by at least one of the following: the minimum system information set; a sidelink discovery signal; a sidelink relay discovery signal; a broadcast message of the relay terminal; and a multicast message of the relay terminal.

Optionally, in a case that the first operation is determined based on whether the remote terminal has searched out the target cell, the first operation satisfies at least one of the following:
in a case that a first condition is satisfied, the first operation includes at least the first sub-operation; and
in a case that the first condition is not satisfied, the first operation is the second sub-operation, where
the first condition includes that the remote terminal has searched out the target cell and that the remote terminal is within coverage of the target cell.

Optionally, in a case that the first operation is the second sub-operation, at least part of system information in the system information is broadcast or multicast by the relay terminal.

Optionally, a broadcast period or a multicast period of the at least part of system information is an integer multiple of a sending period of a sidelink relay discovery signal.

Optionally, that at least part of system information is broadcast or multicast includes at least one of the following:
the at least part of system information is sent by using a sidelink relay discovery signal resource pool or a sidelink discovery signal resource pool; and
the at least part of system information is sent by using a sidelink data communication resource pool.

Optionally, in a case that the first operation includes the second sub-operation, the system information acquired by the remote terminal through the relay terminal includes at least one of the following:
valid system information stored in the relay terminal;
first system information requested by the relay terminal from the target cell based on a system information request of the remote terminal; and
second system information requested by the remote terminal from the target cell through the relay terminal.

Optionally, the valid system information or the second system information is carried by a sidelink radio resource control RRC message sent by the relay terminal or a sidelink RRC container sent by the relay terminal.

Optionally, in a case that the system information includes the first system information, the first execution module 701 is specifically configured to:
send a first request to the relay terminal, where the first request is used to request the first system information; and
receive the first system information through the first interface.

Optionally, the first system information is broadcast by the target cell, or sent by the target cell over an RRC connection between the target cell and the remote terminal.

Optionally, in a case that the system information includes the second system information, the first execution module 701 is specifically configured to:
send a second request to the target cell through the relay terminal, where the second request is used to request the second system information; and
receive the second system information through the relay terminal.

Optionally, the minimum system information set includes at least one of the following:
at least part of information in a MIB;
at least part of information in a SIB 1;
at least part of information in a system information block 12 SIB 12;
configuration information of a sidelink resource pool, where the sidelink resource pool includes at least one of the following: a sidelink data transmission resource pool, a sidelink relay discovery signal resource pool, and a sidelink discovery signal resource pool;
a system information block SIB related to the configuration information; and
reference signal received power RSRP threshold information of the remote terminal.

Optionally, the system information includes at least one of the following: system information corresponding to N broadcast groups; and system information corresponding to M multicast groups, where both N and M are positive integers.

Optionally, in a case that the system information includes updated system information, the first execution module is specifically configured to perform at least one of the following:
in a case that the updated system information is broadcast by the relay terminal, receiving the updated system information through the relay terminal;
in a case that the updated system information is sent by the relay terminal by using a dedicated sidelink RRC message, receiving the system information carried by the dedicated sidelink RRC message;
in a case that the updated system information is broadcast by the target cell and that the remote terminal is within coverage of the target cell, receiving the updated system information through the first interface; and
in a case that the updated system information is not broadcast by the relay terminal and that the remote terminal is not within coverage of the target cell, requesting the updated system information from the target cell through the relay terminal.

The information acquisition apparatus in this embodiment of this application may be an apparatus, an apparatus with an operating system or an electronic device, or may be a component, an integrated circuit, or a chip in a terminal. The apparatus or the electronic device may be a mobile terminal, or may be a nonmobile terminal. For example, the mobile terminal may include but is not limited to the foregoing illustrated type of the terminal. The nonmobile terminal may be a server, a network attached storage (Network Attached Storage, NAS), a personal computer (personal computer, PC), a television (television, TV), a teller machine, a self-service machine, or the like. This is not specifically limited in this embodiment of this application.

The information acquisition apparatus 700 provided in this embodiment of this application can implement each process implemented by the method embodiment in FIG. 4, with the same technical effect achieved. To avoid repetition, details are not described herein again.

It should be noted that the information sending method provided in this embodiment of this application may be performed by an information sending apparatus or a control module for performing the information sending method in the information sending apparatus. An information sending apparatus provided in an embodiment of this application is described by assuming that the information sending method in this embodiment of this application is performed by the information sending apparatus.

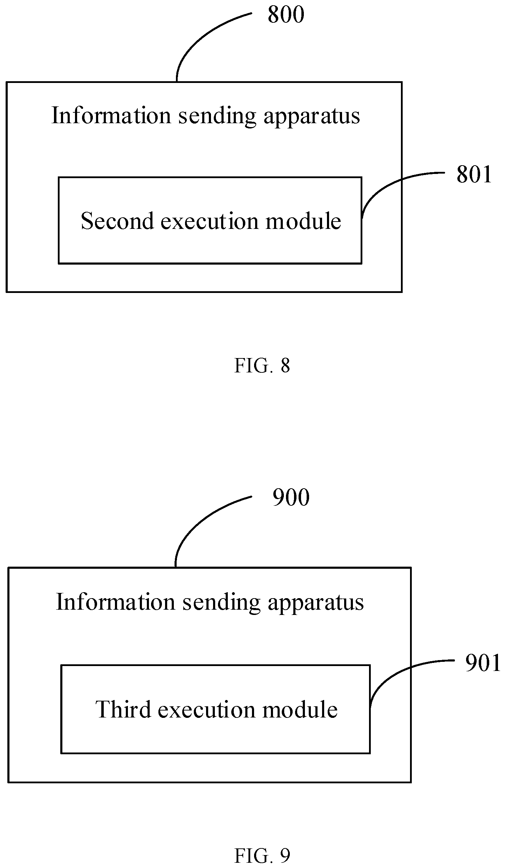

FIG. 8 is a second structural diagram of an information sending apparatus according to an embodiment of this application.

As shown in FIG. 8, the information sending apparatus 800 includes:
a second execution module 801, configured to send at least part of system information to a remote terminal in a case that a second condition is satisfied, where
the second condition includes at least one of the following:
   the remote terminal is within coverage of a same cell as a relay terminal, the remote terminal is not within the coverage of the same cell as the relay terminal, or the remote terminal is not covered by any cell;
   a minimum system information set instructs the remote terminal to acquire system information through the relay terminal; and
   the relay terminal has established a sidelink connection to the remote terminal.

Optionally, the second condition further includes at least one of the following:
a system information acquisition priority of the relay terminal is higher than a system information acquisition priority of a first interface, where the first interface is an air interface between the remote terminal and a cell; and
the remote terminal fails to acquire a second part of system information through the first interface.

Optionally, the at least part of system information includes at least one of the following:
the minimum system information set or at least part of system information other than the minimum system information set;
at least part of system information not broadcast by a target cell;
at least part of system information whose forwarding is supported by the relay terminal;
at least part of system information provided by the target cell;
at least part of updated system information;
valid system information stored in the relay terminal; and
second system information requested by the remote terminal from the target cell through the relay terminal.

Optionally, the at least part of system information whose forwarding is supported by the relay terminal is indicated by first information sent by the relay terminal, and the first information is carried in a broadcast message, a multicast message, or dedicated signaling.

Optionally, the at least part of updated system information is indicated by at least one of the following: the minimum system information set; a sidelink discovery signal; a sidelink relay discovery signal; a broadcast message of the relay terminal; and a multicast message of the relay terminal.

Optionally, the valid system information or the second system information is carried by a sidelink radio resource control RRC message sent by the relay terminal or a sidelink RRC container sent by the relay terminal.

Optionally, in a case that the at least part of system information includes the second system information, the second execution module is specifically configured to:
receive a second request sent by the remote terminal, where the second request is used to request the second system information;
forward the second request to the target cell;
receive the second system information sent by the target cell; and
forward the second system information to the remote terminal.

Optionally, the at least part of system information is broadcast or multicast by the relay terminal.

Optionally, a broadcast period or a multicast period of the at least part of system information is an integer multiple of a sending period of a sidelink relay discovery signal.

Optionally, that the at least part of system information is broadcast or multicast includes at least one of the following:
the at least part of system information is sent by using a sidelink relay discovery signal resource pool or a sidelink discovery signal resource pool; and
the at least part of system information is sent by using a sidelink data communication resource pool.

Optionally, the minimum system information set includes at least one of the following:
at least part of information in a MIB;
at least part of information in a SIB 1;
at least part of information in a system information block 12 SIB 12;
configuration information of a sidelink resource pool, where the sidelink resource pool includes at least one of the following: a sidelink data transmission resource pool, a sidelink relay discovery signal resource pool, and a sidelink discovery signal resource pool;
a system information block SIB related to the configuration information; and
reference signal received power RSRP threshold information of the remote terminal.

Optionally, the at least part of system information includes at least one of the following: system information corresponding to N broadcast groups; and system information corresponding to M multicast groups, where both N and M are positive integers.

The information sending apparatus 800 may be an apparatus, an apparatus with an operating system or an electronic device, or may be a component, an integrated circuit, or a chip in a terminal. The apparatus or the electronic device may be a mobile terminal, or may be a nonmobile terminal. For example, the mobile terminal may include but is not limited to the foregoing illustrated type of the terminal. The nonmobile terminal may be a server, a network attached storage (Network Attached Storage, NAS), a personal computer (personal computer, PC), a television (television, TV), a teller machine, a self-service machine, or the like. This is not specifically limited in this embodiment of this application.

The information sending apparatus 800 provided in this embodiment of this application can implement each process implemented by the method embodiment in FIG. 5, with the same technical effect achieved. To avoid repetition, details are not described herein again.

FIG. 9 is a second structural diagram of an information sending apparatus according to an embodiment of this application.

As shown in FIG. 9, the information sending apparatus 900 includes:
a third execution module 901, configured to send configuration information, where the configuration information is used to configure behavior information of a relay terminal, where
the behavior information includes at least one of the following:
   actively sending, by the relay terminal, a third part of system information to a remote terminal; and
   after receiving a request from the remote terminal, sending, by the relay terminal, a fourth part of system information to the remote terminal.

Optionally, the actively sending, by the relay terminal, a third part of system information to a remote terminal includes:
actively broadcasting or multicasting, by the relay terminal, the third part of system information to the remote terminal.

Optionally, a broadcast period or a multicast period of the third part of system information is an integer multiple of a sending period of a sidelink relay signal.

Optionally, the third part of system information includes at least one of the following:
a minimum system information set;
a master information block MIB and a system information block 1 SIB 1;
system information broadcast by a target cell;
system information not forwarded by the relay terminal; and
system information requested by the remote terminal.

Optionally, the fourth part of system information includes at least one of the following:
a minimum system information set or at least part of system information other than the minimum system information set;
at least part of system information not broadcast by a target cell;
at least part of system information whose forwarding is supported by the relay terminal;
at least part of system information provided by the target cell; and
at least part of updated system information.

The information sending apparatus in this embodiment of this application may be an apparatus, an apparatus with an operating system or an electronic device, or may be a component, an integrated circuit, or a chip in a network-side device. The network-side device may include but is not limited to the foregoing illustrated type of the network-side device. This is not specifically limited in this embodiment of this application.

The information sending apparatus 900 provided in this embodiment of this application can implement each process implemented by the method embodiment in FIG. 6, with the same technical effect achieved. To avoid repetition, details are not described herein again.

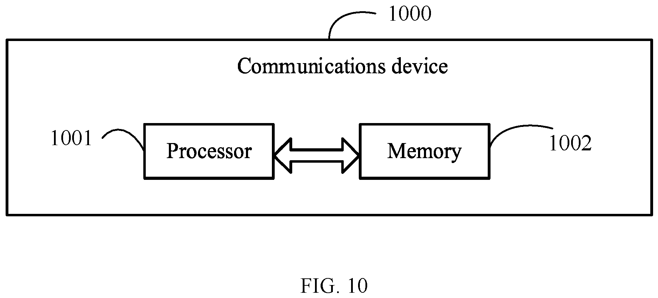

Optionally, as shown in FIG. 10, an embodiment of this application further provides a communications device 1000, including a processor 1001, a memory 1002, and a program or instructions stored in the memory 1002 and capable of running on the processor 1001. For example, when the communications device 1000 is a remote terminal, and the program or instructions are executed by the processor 1001, each process of the foregoing method embodiment in FIG. 4 is implemented, with the same technical effect achieved. When the communications device 1000 is a relay terminal, and the program or instructions are executed by the processor 1001, each process of the foregoing method embodiment in FIG. 5 is implemented, with the same technical effect achieved. When the communications device 1000 is a network-side device, and the program or instructions are executed by the processor 1001, each process of the foregoing method embodiment in FIG. 6 is implemented, with the same technical effect achieved. To avoid repetition, details are not described herein again.

An embodiment of this application further provides a terminal, including a processor and a communications interface.

In a case that the terminal is a remote terminal, the communications interface is configured to:
perform a first operation, where the first operation satisfies at least one of the following:
in a case that the remote terminal is within coverage of a same cell as a relay terminal, the first operation includes at least a first sub-operation;
in a case that the remote terminal is not within the coverage of the same cell as the relay terminal or that the remote terminal is not covered by any cell, the first operation is a second sub-operation; or the first operation is determined based on whether the remote terminal has searched out a target cell, where the target cell is a serving cell covering the relay terminal;
the first operation is determined based on an indication of a minimum system information set; and
the first operation is determined based on whether the remote terminal has established a sidelink connection to the relay terminal, where
the first sub-operation is to acquire system information through a first interface, the first interface is an air interface between the remote terminal and a cell, and the second sub-operation is to acquire system information through the relay terminal.

The terminal embodiment corresponds to the foregoing method embodiment in FIG. 4, and each implementation process and implementation of the foregoing method embodiment in FIG. 4 can be applied to the terminal embodiment, with the same technical effect achieved.

In a case that the terminal is a relay terminal, the communications interface is configured to:
send at least part of system information to a remote terminal in a case that a second condition is satisfied, where
the second condition includes at least one of the following:
   the remote terminal is within coverage of a same cell as a relay terminal, the remote terminal is not within the coverage of the same cell as the relay terminal, or the remote terminal is not covered by any cell;
   a minimum system information set instructs the remote terminal to acquire system information through the relay terminal; and
   the relay terminal has established a sidelink connection to the remote terminal.

The terminal embodiment corresponds to the foregoing method embodiment in FIG. 5, and each implementation process and implementation of the foregoing method embodiment can be applied to the terminal embodiment, with the same technical effect achieved.

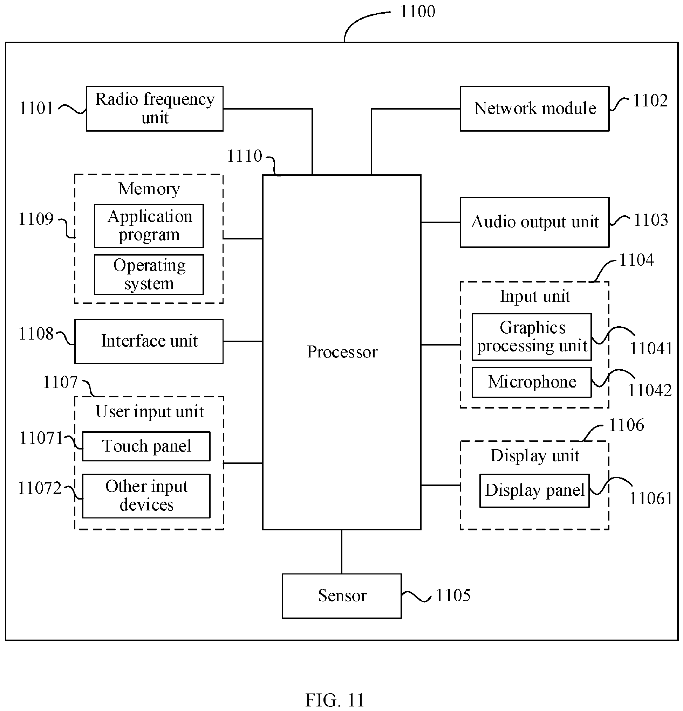

Specifically, FIG. 11 is a schematic diagram of a hardware structure of a terminal for implementing an embodiment of this application.

The terminal 1100 includes but is not limited to at least some components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art may understand that the terminal 1100 may further include a power supply (for example, a battery) supplying power to all components. Optionally, the power supply may be logically connected to the processor 1110 through a power management system. In this way, functions such as charge management, discharge management, and power consumption management are implemented by using the power management system. The terminal structure shown in FIG. 11 does not constitute a limitation on the terminal. The terminal may include more or fewer components than those shown in the figure, or some components are combined, or component arrangements are different. Details are not described herein again.

It should be understood that, in this embodiment of this application, the input unit 1104 may include a graphics processing unit (Graphics Processing Unit, GPU) 11041 and a microphone 11042. The graphics processing unit 11041 processes image data of a still picture or video obtained by an image capture apparatus (such as a camera) in a video capture mode or an image capture mode. The display unit 1106 may include a display panel 11061, and the display panel 11061 may be configured in a form of a liquid crystal display, an organic light-emitting diode, or the like. The user input unit 1107 includes a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function key (such as a volume control key or a power key), a trackball, a mouse, and a joystick. Details are not described herein again.

In this embodiment of this application, after receiving downlink data from a network-side device, the radio frequency unit 1101 sends the downlink data to the processor 1110 for processing, and in addition, sends uplink data to the network-side device. Generally, the radio frequency unit 1101 includes but is not limited to an antenna, at least one amplifier, a transceiver, a coupler, a low noise amplifier, a duplexer, and the like.

The memory 1109 may be configured to store software programs or instructions and various data. The memory 1109 may primarily include a program or instruction storage area and a data storage area. The program or instruction storage area may store an operating system, an application program or instructions (such as an audio play function and an image play function) required by at least one function, and the like. In addition, the memory 1109 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1110 may include one or more processing units. Optionally, the processor 1110 may integrate an application processor and a modem processor. The application processor mainly processes the operating system, a user interface, an application program, or an instruction. The modem processor mainly processes wireless communication. For example, the modem processor is a baseband processor. It may be understood that the modem processor may alternatively not be integrated in the processor 1110.

In a case that the terminal is a remote terminal, the radio frequency unit 1101 is configured to:
perform a first operation, where the first operation satisfies at least one of the following:
in a case that the remote terminal is within coverage of a same cell as a relay terminal, the first operation includes at least a first sub-operation;
in a case that the remote terminal is not within the coverage of the same cell as the relay terminal or that the remote terminal is not covered by any cell, the first operation is a second sub-operation; or the first operation is determined based on whether the remote terminal has searched out a target cell, where the target cell is a serving cell covering the relay terminal;
the first operation is determined based on an indication of a minimum system information set; and
the first operation is determined based on whether the remote terminal has established a sidelink connection to the relay terminal, where
the first sub-operation is to acquire system information through a first interface, the first interface is an air interface between the remote terminal and a cell, and the second sub-operation is to acquire system information through the relay terminal.

In a case that the terminal is a relay terminal, the radio frequency unit 1101 is configured to:
send at least part of system information to a remote terminal in a case that a second condition is satisfied, where
the second condition includes at least one of the following:
   the remote terminal is within coverage of a same cell as a relay terminal, the remote terminal is not within the coverage of the same cell as the relay terminal, or the remote terminal is not covered by any cell;
   a minimum system information set instructs the remote terminal to acquire system information through the relay terminal; and
   the relay terminal has established a sidelink connection to the remote terminal.

It should be noted that the terminal 1100 in this embodiment can implement each process of the method embodiment in FIG. 4 or FIG. 5 in the embodiments of this application, with the same beneficial effect achieved. To avoid repetition, details are not described herein again.

An embodiment of this application further provides a network-side device, including a processor and a communications interface.

The communications interface is configured to:
send configuration information, where the configuration information is used to configure behavior information of a relay terminal, where
the behavior information includes at least one of the following:
   actively sending, by the relay terminal, a third part of system information to a remote terminal; and
   after receiving a request from the remote terminal, sending, by the relay terminal, a fourth part of system information to the remote terminal.

The network-side device embodiment corresponds to the foregoing method embodiment of the network-side device, and each implementation process and implementation of the foregoing method embodiment can be applied to the network-side device embodiment, with the same technical effect achieved.

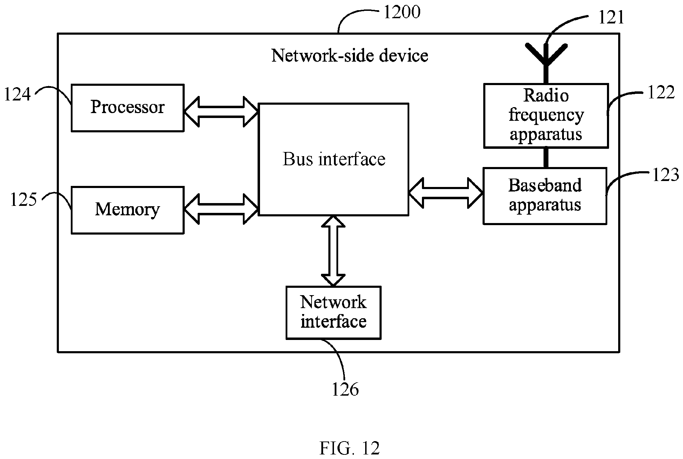

Specifically, an embodiment of this application further provides a network-side device. As shown in FIG. 12, the network device 1200 includes an antenna 121, a radio frequency apparatus 122, and a baseband apparatus 123. The antenna 121 is connected to the radio frequency apparatus 122. In an uplink direction, the radio frequency apparatus 122 receives information by using the antenna 121, and sends the received information to the baseband apparatus 123 for processing. In a downlink direction, the baseband apparatus 123 processes to-be-sent information, and sends the information to the radio frequency apparatus 122; and the radio frequency apparatus 122 processes the received information and then sends the information out by using the antenna 121.

The frequency band processing apparatus may be located in the baseband apparatus 123. The method performed by the network-side device in the foregoing embodiment may be implemented in the baseband apparatus 123, and the baseband apparatus 123 includes a processor 124 and a memory 125.

The baseband apparatus 123 may include, for example, at least one baseband processing unit, where a plurality of chips are disposed on the baseband processing unit. As shown in FIG. 12, one of the chips is, for example, the processor 124, connected to the memory 125, to invoke a program in the memory 125 to perform the operation of the network-side device shown in the foregoing method embodiment.

The baseband apparatus 123 may further include a network interface 126, configured to exchange information with the radio frequency apparatus 122, where the interface is, for example, a common public radio interface (Common Public Radio Interface, CPRI).

Specifically, the network-side device in this embodiment of this application further includes a program or instructions stored in the memory 125 and capable of running on the processor 124. The processor 124 invokes the program or instructions in the memory 125 to perform each process in the method embodiment in FIG. 6, or perform the method performed by each module shown in FIG. 9, with the same technical effect achieved. To avoid repetition, details are not described herein again.

An embodiment of this application further provides a computer-readable storage medium. The computer-readable storage medium stores a computer program. When the computer program is executed by a processor, each process of the foregoing information acquisition or information sending method embodiment is implemented, with the same technical effect achieved. To avoid repetition, details are not described herein again. The computer-readable storage medium is, for example, a read-only memory (Read-Only Memory, ROM), a random access memory (Random Access Memory, RAM), a magnetic disk, or an optical disc.

An embodiment of this application further provides a readable storage medium. The readable storage medium may be volatile or non-volatile. The readable storage medium stores a program or instructions. When the program or instructions are executed by a processor, each process of the foregoing method embodiment in FIG. 4, FIG. 5, or FIG. 6 is implemented, with the same technical effect achieved. To avoid repetition, details are not described herein again.

The processor is a processor in the terminal in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

In addition, an embodiment of this application provides a chip. The chip includes a processor and a communications interface. The communications interface is coupled to the processor. The processor is configured to run a program or instructions to implement each process of the foregoing method embodiment in FIG. 4, FIG. 5, or FIG. 6, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program product. The computer program product is stored in a non-transitory readable storage medium. The computer program product is executed by at least one processor to implement each process of the foregoing method embodiment in FIG. 4, FIG. 5, or FIG. 6, with the same technical effect achieved. To avoid repetition, details are not described herein again.

It should be noted that in this specification, the terms "comprise", "include", and any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. However, this application is not limited to the foregoing specific embodiments. The foregoing specific embodiments are merely illustrative rather than restrictive. Inspired by this application, a person of ordinary skill in the art can still derive a plurality of variations without departing from the essence of this application and the protection scope of the claims. All these variations shall fall within the protection scope of this application.

## Claims

1. An information acquisition method, comprising:
performing, by a remote terminal, a first operation, wherein the first operation satisfies at least one of the following:
in a case that the remote terminal is within coverage of a same cell as a relay terminal, the first operation comprises at least a first sub-operation;
in a case that the remote terminal is not within the coverage of the same cell as the relay terminal or that the remote terminal is not covered by any cell, the first operation is a second sub-operation; or the first operation is determined based on whether the remote terminal has searched out a target cell, wherein the target cell is a serving cell covering the relay terminal;
the first operation is determined based on an indication of a minimum system information set; and
the first operation is determined based on whether the remote terminal has established a sidelink connection to the relay terminal, wherein
the first sub-operation is to acquire system information through a first interface, the first interface is an air interface between the remote terminal and a cell, and the second sub-operation is to acquire system information through the relay terminal.

2. The method according to claim 1, wherein in a case that the first operation comprises at least the first sub-operation, a first part of system information in the system information is acquired through the first interface, and a second part of system information in the system information is acquired through at least one of the first interface and the relay terminal.

3. The method according to claim 2, wherein the acquisition of the second part of system information satisfies at least one of the following:
the remote terminal acquires the second part of system information through the first interface or the relay terminal;
the remote terminal acquires the second part of system information through at least one of the first interface and the relay terminal in descending order of system information acquisition priorities of the first interface and the relay terminal;
in a case that the second part of system information fails to be acquired through the first interface, the remote terminal acquires the second part of system information through the relay terminal; and
in a case that the second part of system information fails to be acquired through the relay terminal, the remote terminal acquires the second part of system information through the first interface.

4. The method according to claim 2, wherein the first part of system information comprises at least one of the following:
the minimum system information set;
a master information block MIB and a system information block 1 SIB 1;
system information broadcast by the target cell;
system information not forwarded by the relay terminal; and
system information requested by the remote terminal.

5. The method according to claim 2, wherein the second part of system information comprises at least one of the following:
the minimum system information set or at least part of system information other than the minimum system information set;
at least part of system information not broadcast by the target cell;
at least part of system information whose forwarding is supported by the relay terminal;
at least part of system information provided by the target cell; and
at least part of updated system information.

6. The method according to claim 5, wherein the at least part of updated system information is indicated by at least one of the following: the minimum system information set; a sidelink discovery signal; a sidelink relay discovery signal; a broadcast message of the relay terminal; and a multicast message of the relay terminal.

7. The method according to claim 1, wherein in a case that the first operation is determined based on whether the remote terminal has searched out the target cell, the first operation satisfies at least one of the following:
in a case that a first condition is satisfied, the first operation comprises at least the first sub-operation; and
in a case that the first condition is not satisfied, the first operation is the second sub-operation, wherein
the first condition comprises that the remote terminal has searched out the target cell and that the remote terminal is within coverage of the target cell.

8. The method according to claim 1, wherein in a case that the first operation is the second sub-operation, at least part of system information in the system information is broadcast or multicast by the relay terminal.

9. The method according to claim 8, wherein a broadcast period or a multicast period of the at least part of system information is an integer multiple of a sending period of a sidelink relay discovery signal.

10. The method according to claim 8, wherein that at least part of system information is broadcast or multicast comprises at least one of the following:
the at least part of system information is sent by using a sidelink relay discovery signal resource pool or a sidelink discovery signal resource pool; and
the at least part of system information is sent by using a sidelink data communication resource pool.

11. The method according to any one of claims 1 to 10, wherein in a case that the first operation comprises the second sub-operation, the system information acquired by the remote terminal through the relay terminal comprises at least one of the following:
valid system information stored in the relay terminal;
first system information requested by the relay terminal from the target cell based on a system information request of the remote terminal; and
second system information requested by the remote terminal from the target cell through the relay terminal.

12. The method according to claim 11, wherein the valid system information or the second system information is carried by a sidelink radio resource control RRC message sent by the relay terminal or a sidelink RRC container sent by the relay terminal.

13. The method according to claim 11, wherein in a case that the system information comprises the first system information, the performing, by a remote terminal, a first operation comprises:
sending, by the remote terminal, a first request to the relay terminal, wherein the first request is used to request the first system information; and
receiving, by the remote terminal, the first system information through the first interface.

14. The method according to claim 13, wherein the first system information is broadcast by the target cell, or sent by the target cell over an RRC connection between the target cell and the remote terminal.

15. The method according to claim 11, wherein in a case that the system information comprises the second system information, the performing, by a remote terminal, a first operation comprises:
sending, by the remote terminal, a second request to the target cell through the relay terminal, wherein the second request is used to request the second system information; and
receiving, by the remote terminal, the second system information through the relay terminal.

16. The method according to claim 1, wherein the minimum system information set comprises at least one of the following:
at least part of information in a MIB;
at least part of information in a SIB 1;
at least part of information in a system information block 12 SIB 12;
configuration information of a sidelink resource pool, wherein the sidelink resource pool comprises at least one of the following: a sidelink data transmission resource pool, a sidelink relay discovery signal resource pool, and a sidelink discovery signal resource pool;
a system information block SIB related to the configuration information; and
reference signal received power RSRP threshold information of the remote terminal.

17. The method according to claim 1, wherein the system information comprises at least one of the following: system information corresponding to N broadcast groups; and system information corresponding to M multicast groups, wherein both N and M are positive integers.

18. The method according to claim 1, wherein in a case that the system information comprises updated system information, the performing, by a remote terminal, a first operation comprises at least one of the following:
in a case that the updated system information is broadcast by the relay terminal, receiving, by the remote terminal, the updated system information through the relay terminal;
in a case that the updated system information is sent by the relay terminal by using a dedicated sidelink RRC message, receiving, by the remote terminal, the system information carried by the dedicated sidelink RRC message;
in a case that the updated system information is broadcast by the target cell and that the remote terminal is within coverage of the target cell, receiving, by the remote terminal, the updated system information through the first interface; and
in a case that the updated system information is not broadcast by the relay terminal and that the remote terminal is not within coverage of the target cell, requesting, by the remote terminal, the updated system information from the target cell through the relay terminal.

19. An information sending method, comprising:
in a case that a second condition is satisfied, sending, by a relay terminal, at least part of system information to a remote terminal, wherein
the second condition comprises at least one of the following:
the remote terminal is within coverage of a same cell as the relay terminal, the remote terminal is not within the coverage of the same cell as the relay terminal, or the remote terminal is not covered by any cell;
a minimum system information set instructs the remote terminal to acquire system information through the relay terminal; and
the relay terminal has established a sidelink connection to the remote terminal.

20. The method according to claim 19, wherein the second condition further comprises at least one of the following:
a system information acquisition priority of the relay terminal is higher than a system information acquisition priority of a first interface, wherein the first interface is an air interface between the remote terminal and a cell; and
the remote terminal fails to acquire a second part of system information through the first interface.

21. The method according to claim 19, wherein the at least part of system information comprises at least one of the following:
the minimum system information set or at least part of system information other than the minimum system information set;
at least part of system information not broadcast by a target cell;
at least part of system information whose forwarding is supported by the relay terminal;
at least part of system information provided by the target cell;
at least part of updated system information;
valid system information stored in the relay terminal; and
second system information requested by the remote terminal from the target cell through the relay terminal.

22. The method according to claim 21, wherein the at least part of system information whose forwarding is supported by the relay terminal is indicated by first information sent by the relay terminal, and the first information is carried in a broadcast message, a multicast message, or dedicated signaling.

23. The method according to claim 21, wherein the at least part of updated system information is indicated by at least one of the following: the minimum system information set; a sidelink discovery signal; a sidelink relay discovery signal; a broadcast message of the relay terminal; and a multicast message of the relay terminal.

24. The method according to claim 21, wherein the valid system information or the second system information is carried by a sidelink radio resource control RRC message sent by the relay terminal or a sidelink RRC container sent by the relay terminal.

25. The method according to claim 21, wherein in a case that the at least part of system information comprises the second system information, the sending, by a relay terminal, at least part of system information to a remote terminal comprises:
receiving, by the relay terminal, a second request sent by the remote terminal, wherein the second request is used to request the second system information;
forwarding, by the relay terminal, the second request to the target cell;
receiving, by the relay terminal, the second system information sent by the target cell; and
forwarding, by the relay terminal, the second system information to the remote terminal.

26. The method according to claim 19, wherein the at least part of system information is broadcast or multicast by the relay terminal.

27. The method according to claim 26, wherein a broadcast period or a multicast period of the at least part of system information is an integer multiple of a sending period of a sidelink relay discovery signal.

28. The method according to claim 26, wherein that the at least part of system information is broadcast or multicast comprises at least one of the following:
the at least part of system information is sent by using a sidelink relay discovery signal resource pool or a sidelink discovery signal resource pool; and
the at least part of system information is sent by using a sidelink data communication resource pool.

29. The method according to claim 19, wherein the minimum system information set comprises at least one of the following:
at least part of information in a MIB;
at least part of information in a SIB 1;
at least part of information in a system information block 12 SIB 12;
configuration information of a sidelink resource pool, wherein the sidelink resource pool comprises at least one of the following: a sidelink data transmission resource pool, a sidelink relay discovery signal resource pool, and a sidelink discovery signal resource pool;
a system information block SIB related to the configuration information; and
reference signal received power RSRP threshold information of the remote terminal.

30. The method according to claim 19, wherein the at least part of system information comprises at least one of the following: system information corresponding to N broadcast groups; and system information corresponding to M multicast groups, wherein both N and M are positive integers.

31. An information sending method, comprising:
sending, by a network-side device, configuration information, wherein the configuration information is used to configure behavior information of a relay terminal, wherein
the behavior information comprises at least one of the following:
actively sending, by the relay terminal, a third part of system information to a remote terminal; and
after receiving a request from the remote terminal, sending, by the relay terminal, a fourth part of system information to the remote terminal.

32. The method according to claim 31, wherein the actively sending, by the relay terminal, a third part of system information to a remote terminal comprises:
actively broadcasting or multicasting, by the relay terminal, the third part of system information to the remote terminal.

33. The method according to claim 32, wherein a broadcast period or a multicast period of the third part of system information is an integer multiple of a sending period of a sidelink relay signal.

34. The method according to any one of claims 31 to 33, wherein the third part of system information comprises at least one of the following:
a minimum system information set;
a master information block MIB and a system information block 1 SIB1;
system information broadcast by a target cell;
system information not forwarded by the relay terminal; and
system information requested by the remote terminal.

35. The method according to claim 32 or 33, wherein the fourth part of system information comprises at least one of the following:
a minimum system information set or at least part of system information other than the minimum system information set;
at least part of system information not broadcast by a target cell;
at least part of system information whose forwarding is supported by the relay terminal;
at least part of system information provided by the target cell; and
at least part of updated system information.

36. An information acquisition apparatus, comprising:
a first execution module, configured to perform a first operation, wherein the first operation satisfies at least one of the following:
in a case that the remote terminal is within coverage of a same cell as a relay terminal, the first operation comprises at least a first sub-operation;
in a case that the remote terminal is not within the coverage of the same cell as the relay terminal or that the remote terminal is not covered by any cell, the first operation is a second sub-operation; or the first operation is determined based on whether the remote terminal has searched out a target cell, wherein the target cell is a serving cell covering the relay terminal;
the first operation is determined based on an indication of a minimum system information set; and
the first operation is determined based on whether the remote terminal has established a sidelink connection to the relay terminal, wherein
the first sub-operation is to acquire system information through a first interface, the first interface is an air interface between the remote terminal and a cell, and the second sub-operation is to acquire system information through the relay terminal.

37. An information sending apparatus, comprising:
a second execution module, configured to send at least part of system information to a remote terminal in a case that a second condition is satisfied, wherein
the second condition comprises at least one of the following:
the remote terminal is within coverage of a same cell as a relay terminal, the remote terminal is not within the coverage of the same cell as the relay terminal, or the remote terminal is not covered by any cell;
a minimum system information set instructs the remote terminal to acquire system information through the relay terminal; and
the relay terminal has established a sidelink connection to the remote terminal.

38. An information sending apparatus, comprising:
a third execution module, configured to send configuration information, wherein the configuration information is used to configure behavior information of a relay terminal, wherein
the behavior information comprises at least one of the following:
actively sending, by the relay terminal, a third part of system information to a remote terminal; and
sending, by the relay terminal, a fourth part of system information to the remote terminal based on a request of the remote terminal.

39. A terminal, comprising a processor, a memory, and a program or instructions stored in the memory and capable of running on the processor, wherein when the program or instructions are executed by the processor, the steps of the information acquisition method according to any one of claims 1 to 18 are implemented, or the steps of the information sending method according to any one of claims 19 to 30 are implemented.

40. A network-side device, comprising a processor, a memory, and a program or instructions stored in the memory and capable of running on the processor, wherein when the program or instructions are executed by the processor, the steps of the information sending method according to any one of claims 31 to 35 are implemented.

41. A readable storage medium, wherein the readable storage medium stores a program or instructions, and when the program or instructions are executed by a processor, the steps of the information acquisition method according to any one of claims 1 to 18 are implemented, or the steps of the information sending method according to any one of claims 19 to 30 are implemented, or the steps of the information sending method according to any one of claims 31 to 35 are implemented.

42. A chip, wherein the chip comprises a processor and a communications interface, the communications interface is coupled to the processor, and the processor is configured to run a program or instructions to implement the steps of the information acquisition method according to any one of claims 1 to 18, or implement the steps of the information sending method according to any one of claims 19 to 30, or implement the steps of the information sending method according to any one of claims 31 to 35.

43. A computer program product, wherein the computer program product is stored in a non-volatile storage medium, and the computer program product is executed by at least one processor to implement the steps of the information acquisition method according to any one of claims 1 to 18, or implement the steps of the information sending method according to any one of claims 19 to 30, or implement the steps of the information sending method according to any one of claims 31 to 35.

44. A communications device, configured to perform the steps of the information acquisition method according to any one of claims 1 to 18, or perform the steps of the information sending method according to any one of claims 19 to 30, or perform the steps of the information sending method according to any one of claims 31 to 35.
